# EUROPÄISCHE PATENTSCHRIFT

(11) **EP 1 232 910 B1**
(45) Veröffentlichungstag und Bekanntmachung des Hinweises auf die Patenterteilung: **10.11.2010**
(21) Anmeldenummer: 02003330.4
(22) Anmeldetag: 13.02.2002
(51) Int. Cl.: B60Q 1/30

(54) **Fahrzeugleuchte**
Vehicle light
Feu de véhicule

(30) Priorität: 14.02.2001 DE 20102587 U
(43) Veröffentlichungstag der Anmeldung: 21.08.2002
(73) Patentinhaber: Truck-Lite Europe GmbH, 99819 Eisenach (DE)
(72) Erfinder: Künstler, Rolf, 99817 Eisenach (DE); Matthie, Daniel, 99834 Gerstungen (DE)
(74) Vertreter: Strasser, Wolfgang

(56) Entgegenhaltungen:
- DE-U- 20 110 842
- US-A- 3 710 095
- US-A- 5 471 371

## Beschreibung

Die Erfindung betrifft eine Fahrzeugleuchte, insbesondere hochgesetzte Bremsleuchte für Kraftfahrzeuge der im Anspruch 1 beschriebenen Art.

Solche Leuchten sind beispielsweise aus der DE 196 47 094 bekannt. Nachteilig ist an diesen bekannten Anordnungen, daß die Lichtaustrittsscheibe eine optisch wirksame Struktur aufweisen muß, um die erforderliche bzw. gewünschte Verteilung des aus der Leuchte austretenden Lichtes zu erzielen. Dies entspricht nicht den modernen Anforderungen, die auf ein möglichst klares Design abzielen, das die technischen Strukturen einer solchen Leuchte erkennen läßt.

Somit liegt der Erfindung die Aufgabe zugrunde, eine Fahrzeugleuchte der eingangs genannten Art zu schaffen, die modernen Design-Anforderungen entspricht und es dennoch ermöglicht, dem aus der Leuchte austretenden Licht eine wählbare, den gesetzlichen Anforderungen entsprechende Verteilung aufzuprägen.

Zur Lösung dieser Aufgabe sieht die Erfindung die im Anspruch 1 niedergelegten Merkmale vor.

Dadurch, daß die Lichtaustrittsscheibe als optisch inaktives Bauelement ausgebildet ist, das die Lichtverteilung des aus der Leuchte austretenden Lichtes in keiner Weise beeinflußt, erhält die erfindungsgemäße Leuchte ein den modernen Design-Anforderungen entsprechendes Aussehen, da man von außen insbesondere entgegen der Abstrahlrichtung in die Leuchte hinein blicken und die in ihr befindliche, spiegelnde Reflektoranordnung erkennen kann. Die reflektierenden Oberflächen der einzelnen Reflektoren dieser Anordnung folgen zwar im wesentlichen einer teilparabolischen Hüllfläche, sind jedoch in eine Vielzahl von gegen diese Hüllfläche verkippten Teilflächen bzw. Facetten unterteilt, deren Anzahl, Größe und Verkippung bzw. Neigung im Raum innerhalb weiter Grenzen variiert werden kann, um die jeweils gewünschte bzw. erforderliche Lichtverteilung zu erzielen.

Weitere vorteilhafte Ausgestaltungen einer erfindungsgemäßen Fahrzeugleuchte sind in den Unteransprüchen niedergelegt.

Die Erfindung wird im folgenden anhand eines Ausführungsbeispiels unter Bezugnahme auf die Zeichnung beschrieben ; in dieser zeigen:
- Fig. 1: eine schematische Schnittansicht durch eine erfindungsgemäße Fahrzeugleuchte und
- Fig. 2: eine entgegen der Abstrahlrichtung gesehene Darstellung der an der Linie A-A hal- bierten Leuchtdioden- und Reflektoranordnung der Fahrzeugleuchte aus Fig. 1.

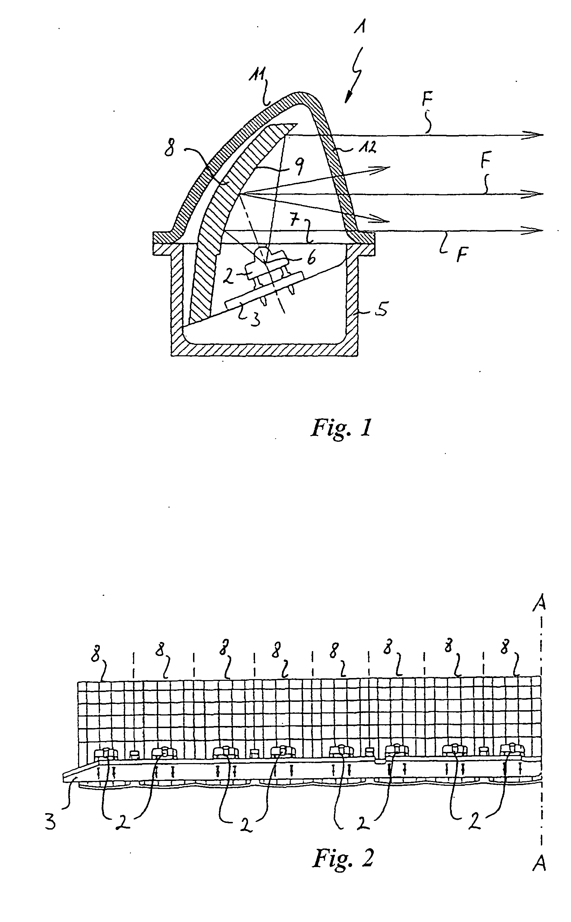

Wie man der Fig. 1 entnimmt, sind die Leuchtdioden 2 einer erfindungsgemäßen, hochgesetzten Bremsleuchte 1 auf einer gemeinsamen Leiterplatte 3 montiert, die in der in Fig. 1 wiedergegebenen Einbaulage gegen die Horizontale nach oben und hinten, d. h. entgegen der durch die Pfeile F dargestellten Abstrahlrichtung geneigt in ein im Querschnitt im wesentlichen rechteckiges, trogartiges Gehäuse 5 aus lichtundurchlässigem Material so eingebaut ist, daß sich der Licht emittierende Bereich 6 der Leuchtdioden 2 knapp unterhalb der Oberkante 7 des Gehäuses 5 befindet.

Im Gehäuse 5 ist ein teilparabolischer Reflektor 8 so montiert, daß er mit seiner reflektierenden Fläche 9 aus dem Gehäuse nach oben heraus ragt. Aufgrund dieser Anordnung wird das von der jeweiligen Leuchtdiode 2 von schräg unten in den Reflektor 8 eingestrahlte Licht im wesentlichen in horizontaler Richtung (Pfeile F) abgestrahlt. Somit sind die Leuchtdioden 2 nicht unmittelbar sichtbar, wenn man von hinten, d. h. entgegen der Richtung der Pfeile F auf die erfindungsgemäße Bremsleuchte 1 blickt.

Auf das Gehäuse 5 ist eine im Querschnitt der Fig. 1 in etwa dreieckige Haube 11 aus lichtdurchlässigem Material aufgesetzt, deren in Fig. 1 rechter Teil die Lichtaustrittsscheibe 12 der erfindungsgemäßen Bremsleuchte 1 bildet.

Wesentlich ist dabei, daß diese Lichtaustrittsscheibe 12 als optisch inaktives Bauelement ausgebildet ist und keinerlei Einfluß auf die Verteilung des aus der Bremsleuchte 1 austretenden Lichtes nimmt.

Diese Aufgabe übernehmen erfindungsgemäß die Reflektoren 8, von denen gemäß Fig. 2, welche nur die halbe Anordnung zeigt, sechzehn nebeneinander angeordnet und einstückig miteinander verbunden sind. Wie man der Fig. 2 entnimmt, ist die reflektierende Fläche eines jeden Reflektors 8 in eine Vielzahl von Facetten unterteilt, die gegen die eine Teilparabel bildende Hüllfläche individuell verkippt sind, um eine gewünschte Lichtverteilung zu erzielen.

## Patentansprüche

1. Fahrzeugleuchte, insbesondere hochgesetzte Bremsleuchte (1) für Kraftfahrzeuge, die eine Vielzahl von Lichtquellen (2) umfasst, die in einer in Einbaulage im wesentlichen horizontalen Reihe nebeneinander angeordnet sind, wobei jeder Lichtquelle (2) ein teilparabolischer Reflektor (8) zugeordnet und die Lichtquelle (2) gegen ihren zugehörigen Reflektor (8) so seitlich versetzt angeordnet ist, dass das von ihr unmittelbar abgegebene Licht von schräg unten in den Reflektor (8) eingestrahlt und von diesem durch eine Lichtaustrittsscheibe (12) nach außen abgegeben wird,
**dadurch gekennzeichnet,**
**dass** die Lichtquellen (2) in einem trogartigen, nach einer Seite hin offenen Gehäuse (5) aus lichtundurchlässigem Material so angeordnet sind, dass sich ihr Licht emittierender Bereich (6) knapp innerhalb der Kante (7) der Gehäuseöffnung befindet, wobei der jeweils eine optisch wirksame Struktur besitzende, das reflektierte Licht mit einer gewünschten Verteilung in vorgebbare Winkelbereiche ablenkende, zugehörige Reflektor (8) aus dem Gehäuse herausragt,
und **dass** die als optisch inaktives Bauelement ausgebildete Lichtaustrittsscheibe (12) Teil einer auf das Gehäuse (5) aufgesetzten, die Gehäuseöffnung verschließenden Haube (11) aus lichtdurchlässigem Material ist.

2. Fahrzeugleuchte nach Anspruch 1, **dadurch gekennzeichnet, dass** die Lichtquellen (2) von Leuchtdioden gebildet sind.

3. Fahrzeugleuchte nach Anspruch 1 oder 2, **dadurch gekennzeichnet, dass** die optisch wirksame Struktur eines jeden Reflektors (8) von Facetten gebildet ist.

4. Fahrzeugleuchte nach einem der vorhergehenden Ansprüche, **dadurch gekennzeichnet, dass** die Reflektoren (8) einstückig miteinander verbunden sind und dass allen Reflektoren (8) eine gemeinsame Lichtaustrittsscheibe (12) zugeordnet ist.

5. Fahrzeugleuchte nach einem der vorhergehenden Ansprüche, **dadurch gekennzeichnet, dass** die Lichtquellen (2) auf einer gemeinsamen, in Einbaulage gegen die Horizontale geneigten Leiterplatte (3) montiert sind.

## Claims

1. A vehicle lamp, in particular a high-set brake lamp (1) for motor vehicles, which includes a plurality of light sources (2) which are arranged in mutually juxtaposed relationship in a row which is substantially horizontal in the position of installation, wherein associated with each light source (2) is a part-parabolic reflector (8) and the light source (2) is arranged in laterally displaced relationship with respect to its associated reflector (8) in such a way that the light directly emitted thereby is radiated inclinedly from below into the reflector (8) and is emitted therefrom outwardly through a light exit cover (12),
**characterised in that**
the light sources (2) are arranged in a trough-like housing (5) of non-translucent material, which is open towards one side, in such a way that its light-emitting region (6) is just within the edge (7) of the opening of the housing, wherein the respectively associated reflector (8) which has an optically operative structure and deflects the reflected light with a desired distribution into predeterminable angular regions projects out of the housing,
and that the light exit cover (12) which is in the form of an optically inactive component is part of a cap (11) of translucent material which is fitted on to the housing (5) and which closes the opening of the housing.

2. A vehicle lamp according to claim 1 **characterised in that** the light sources (2) are formed by light emitting diodes.

3. A vehicle lamp according to claim 1 or claim 2 **characterised in that** the optically operative structure of each reflector (8) is formed by facets.

4. A vehicle lamp according to one of the preceding claims **characterised in that** the reflectors (8) are integrally connected together and that a common light exit cover (12) is associated with all reflectors (8).

5. A vehicle lamp according to one of the preceding claims **characterised in that** the light sources (2) are mounted on a common printed circuit board (3) which in the position of installation is inclined relative to the horizontal.

## Revendications

1. Feu de véhicule, en particulier feu de stop surélevé (1) pour véhicules automobiles, qui comporte une pluralité de sources lumineuses (2) qui, dans la position montée, sont disposées les unes à côté des autres en une rangée sensiblement horizontale, un réflecteur (8) partiellement parabolique étant associé à chaque source lumineuse (2), et la source lumineuse (2) étant disposée de manière latéralement décalée par rapport à son réflecteur (8) associé, de telle sorte que la lumière émise directement par ladite source lumineuse est injectée en oblique par le bas dans le réflecteur (8) et est dirigée vers l'extérieur par celui-ci à travers un verre de sortie de lumière (12),
**caractérisé**
**en ce que** les sources lumineuses (2) sont disposées dans un boîtier (5) en forme de cuve, ouvert vers un côté et réalisé dans un matériau opaque, de telle sorte que leur zone (6) émettant la lumière se situe juste à l'intérieur du bord (7) de l'ouverture du boîtier, le réflecteur (8) associé, qui comporte une structure optiquement active et qui dévie la lumière réfléchie avec une répartition souhaitée dans des zones angulaires prédéfinissable, s'avançant hors du boîtier,
et **en ce que** le verre de sortie de la lumière (12), réalisé sous la forme d'un composant optiquement inactif, fait partie d'un globe (11) posé sur le boîtier (5), obturant l'ouverture du boîtier et réalisé dans un matériau transparent.

2. Feu de véhicule selon la revendication 1, **caractérisé en ce que** les sources lumineuses (2) sont formées par des diodes électroluminescentes.

3. Feu de véhicule selon la revendication 1 ou 2, **caractérisé en ce que** la structure optiquement active de chaque réflecteur (8) est formée par des facettes.

4. Feu de véhicule selon l'une quelconque des revendications précédentes, **caractérisé en ce que** les réflecteurs (8) sont reliés d'un seul tenant entre eux et **en ce qu'**un verre de sortie de la lumière (12) commun est associé à tous les réflecteurs (8).

5. Feu de véhicule selon l'une quelconque des revendications précédentes, **caractérisé en ce que** les sources lumineuses (2) sont montées sur une plaquette de circuits imprimés (3) commune, inclinée par rapport à l'horizontale dans la position montée.
